# EUROPÄISCHE PATENTSCHRIFT

(11) **EP 0 697 321 B1**
(45) Veröffentlichungstag und Bekanntmachung des Hinweises auf die Patenterteilung: **17.03.1999**
(21) Anmeldenummer: 94250196.6
(22) Anmeldetag: 02.08.1994
(51) Int. Cl.: B61L 17/00, B61L 23/34

(54) **Rangierautomatik für schienengebundene Güterwagen**
Automatic marshalling yard for railway freights wagon
Triage automatique pour wagons de marchandises ferroviaires

(43) Veröffentlichungstag der Anmeldung: 21.02.1996
(73) Patentinhaber: Beule, Erhard, Dipl.-Ing., D-33102 Paderborn (DE)
(72) Erfinder: Beule, Erhard, Dipl.-Ing., D-33102 Paderborn (DE)

(56) Entgegenhaltungen:
- EP-A- 0 144 619
- DE-A- 4 302 377
- GB-A- 1 183 071
- US-A- 3 654 456

## Beschreibung

Die Erfindung bezieht sich auf ein Verfahren und eine Einrichtung zur Automatisierung des Rangierbetriebes von schienengebundenen Güterwagen.

Der besondere Vorteil des Eisenbahngüterverkehrs liegt in der Möglichkeit, einzelne Wagen zu größeren Zugeinheiten zu bündeln und diese mit vergleichsweise geringem Aufwand über größere Entfernungen zu befördern. Beim Transport kleinerer Gütermengen, die nur einzelne Wagen oder kleinere Wagengruppen ausfüllen, ist jedoch eine wiederholtes Bilden und Auflösen der Züge mit Sortieren der Wagen erforderlich, um Zugverbände mit ausreichender Länge zu bilden.

Die hierzu notwendigen Rangieranlagen bestehen im wesentlichen aus Einfahrgleisen, einer Ablaufanlage mit anschließender Weichenverteilzone und daran anschließenden Richtungsgleisen, in denen die Güterwagen mit gleicher Laufrichtung gesammelt und zu neuen Zügen zusammengestellt werden. Der eigentliche Rangiervorgang besteht darin, daß die entkoppelten Güterwagen von einer Rangierlok über einen Ablaufberg geschoben werden, auf dessen Talseite die Wagen unter Einfluß der Hangabtriebskraft beschleunigen und anschließend über die Weichenverteilzone das ihrem Laufziel entsprechende Richtungsgleis erreichen.

Zur Vermeidung schädlicher Rangierstöße ist es erforderlich, die in die Richtungsgleise einlaufenden Wagen bei Annäherung an bereits dort stehende rechtzeitig abzubremsen. In herkömmlichen Rangierbahnhöfen erfolgt dies durch die gefahrvolle und personalintensive Methode des Hemmschuhlegens, während bei modernen Rangierbahnhöfen automatische Gleisbremsen in Kombination mit Weiterführungseinrichtungen zum Einsatz kommen.

Insbesondere bei großen Rangierbahnhöfen mit ausgedehnten Weichenverteilzonen besteht zudem das Problem, daß die Wagen aufgrund unterschiedlicher Laufeigenschaffen verschieden schnell ablaufen, so daß die schneller ablaufenden Wagen die langsameren in der Weichenverteilzone einholen. Dies führt neben schädlichen Rangierstößen zu Falschläufern, da die Weichen zwischen den Wagen nicht mehr rechtzeitig umgestellt werden können und somit diese in die falschen Richtungsgleise einlaufen.

Es sind verschiedene Rangieranlagen und Verfahren bekannt, durch Einsatz gestaffelter, automatischer Gleisbremsen unzulässige Annäherungen der Wagen in der Ablaufzone zu vermeiden, die Einlaufgeschwindigkeit in die Richtungsgleise zu vermindern und mit Hilfe von Weiterführungseinrichtungen die Wagen in den Richtungsgleisen kuppelreif beizudrücken.

Ein wesentlicher Nachteil bisheriger Rangieranlagen besteht darin, daß insbesondere beim Hemmschuhlegebetrieb und selbst bei Einsatz automatischer Gleisbremsen und Weiterführungseinrichtungen schädliche Rangierstöße infolge nicht genügender Abbremsung der Wagen auftreten, die häufig zu einer Beschädigung von Wagen oder Ladegut führen.

Nachteilig bei der bisherigen Rangiertechnik sind auch die vergleichsweise hohen Kosten für automatische Gleisbremsen und Weiterführungseinrichtungen, so daß sich der Einsatz dieser Technik auf kleineren, für die Feinverteilung wichtiger Rangieranlagen und Güterbahnhöfen als unwirtschaftlich erweist und deshalb hier weiterhin die personalintensive Methode des Hemmschuhlegens zum Einsatz kommt.

Bei bisherigen Rangierverfahren müssen zur Vorbereitung des Rangierens die Güterwagen zunächst identifiziert und eine Zerlegeliste erstellt werden. Anschließend sind die Güterwagen gemäß Zerlegeliste an den vorgesehenen Trennstellen manuell zu entkuppeln und die Bremsen durch Betätigen eines Ventils zu entlüften. Nach dem Rangieren müssen zur Herstellung der Abfahrbereitschaft die Wagen wieder gekuppelt, die Bremsschläuche verbunden, die Laufsicherheit überprüft, die Bremsenbetriebsart (Stellung G oder P) und gegebenenfalls die Bremskraft eingestellt und eine Bremsprobe durchgeführt werden. Neben einem hohen Personaleinsatz verursachen diese Tätigkeiten erhebliche zeitliche Verzögerungen des Rangierbetriebes und damit des gesamten Transportablaufs um jeweils mehrere Stunden pro Durchlauf.

Eine weitere Verzögerung des Transportablaufs tritt dadurch ein, daß große Rangierbahnhöfe mit hohem Wagenaufkommen eine relativ geringe Ablaufleistung von maximal etwa 250 Wagen pro Stunde aufweisen, so daß es zu Hauptverkehrszeiten zu einer zusätzlichen Verzögerung kommt, da nur ein Teil der zu befördernden Güterwagen rechtzeitig abgefertigt werden kann.

Trotz eines hohen Aufwandes für die Modernisierung einiger Rangieranlagen ist es bisher nicht gelungen, den Einzelwagenverkehr über die gesamte Transportkette vom Versender zum Empfänger grundlegend zu automatisieren, um so den Transportablauf zu beschleunigen und rationell zu gestalten und schädliche Rangierstöße zu vermeiden.

Ein Verfahren gemäß dem Oberbegriff des Anspruchs 1 sowie eine Rangierautomatik gemäß dem Oberbegriff des Anspruchs 5 sind aus GB-A-1 183 071 bekannt.

Aufgabe der vorliegenden Erfindung ist es, ein automatisches Rangierverfahren mit dazugehöriger Vorrichtung anzugeben, das die beschriebenen Probleme vermeidet und eine volle Automatisierung des Rangierbetriebes auf allen Rangieranlagen ermöglicht, um insbesondere den Personalaufwand drastisch zu reduzieren, die Ablaufleistung zu erhöhen, den Transportablauf wesentlich zu beschleunigen und zur Schonung von Wagen und Ladung schädliche Rangierstöße völlig zu vermeiden.

Diese Aufgabe wird durch das Verfahren gemäß Anspruch 1 und die Rangierautomatik gemäß Anspruch 5 gelöst. Vorteilhafte Ausgestaltungen und Weiterbildungen der Erfindung sind in den Unteransprüchen angegeben.

Das Grundprinzip dieser Erfindung besteht darin, die zur vollen Automatisierung des Rangierbetriebes notwendige Technik, wie das Abkoppeln der Wagen, das Abbremsen auf eine gleichmäßige Geschwindigkeit und die zielgenaue Abbremsung in den Richtungsgleisen, soweit wie möglich in die Güterwagen selbst zu integrieren.

Vorzugsweise werden die Güterwagen hierzu mit einer in die Wagen integrierten Rangierautomatik ausgestattet, die eine fernbediente Abkopplung der Güterwagen und Entlüftung der Bremsen, eine selbsttätige Abbremsung der Wagen in der Ablaufzone auf eine vorgegebene Soll-Ablaufgeschwindigkeit und eine selbsttätige Zielbremsung in den Richtungsgleisen bei Annäherung an vorausbefindliche Wagen sowie eine automatische Wiederankopplung ermöglicht. Ferner erlaubt die integrierte Rangierautomatik eine automatische Identifizierung der einlaufenden Wagen, eine fernbediente Einstellung der Bremsenbetriebsart, eine selbsttätige Einstellung der Bremskraft bei Wagen ohne automatische Bremskrafteinstellung, eine Ferndiagnose der wichtigsten Komponenten, insbesondere der automatischen Kupplung und des Bremsensystems sowie zur Herstellung der Abfahrbereitschaft eine fernüberwachte Bremsprobe.

Die in die Güterwagen integrierte Rangierautomatik besteht im wesentlichen aus einem Steuerungs-Mikrocomputer zur Steuerung der Rangierautomatik und Regelung der Ablaufgeschwindigkeit, Sensoren zur Erfassung des Ablaufweges und der Wagengeschwindigkeit sowie des Abstandes zu vorausfahrenden oder vorausstehenden Wagen. Ferner verfügt die Rangierautomatik über Aktoren zur Betätigung der herkömmlichen Wagenbremse, der automatischen Kupplungen, der Einrichtung zum Entlüften der Bremse, der Einstellvorrichtungen für die Bremskraft und Bremsenbetriebsart.

In der Ablaufzone der Rangieranlage ist es notwendig, die unterschiedlichen Laufeigenschaften der Wagen durch eine Steuerung der Geschwindigkeit so auszugleichen, daß sich möglichst gleichmäßige Abstände zwischen den ablaufenden Abteilungen ergeben und ein Mindestabstand eingehalten wird, um die Weichen zwischen den Abteilungen ungehindert umstellen zu können. Hierzu ist es notwendig, die schneller ablaufenden Wagen auf das Geschwindigkeitsprofil der langsameren Wagen mit höherem Laufwiderstand abzubremsen, so daß die schnelleren Wagen die Langsameren nicht einholen können.

Zur Steuerung der Geschwindigkeit sind die Wagen mit einer Steuer- und Regeleinrichtung ausgestattet, die eine selbsttätige Abbremsung der Wagen auf eine vorgegebene Soll-Ablaufgeschwindigkeit ermöglicht. Die Werte für die Soll-Ablaufgeschwindigkeit können entweder am Steuerungscomputer des Wagens fest voreingestellt oder von einem Leitstand über Datenfunk vorgegeben werden und orientieren sich am Ablaufverhalten der langsameren Wagen und der örtlichen Verhältnisse der jeweiligen Rangieranlage. Die Soll-Ablaufgeschwindigkeit kann entweder ein konstanter Geschwindigkeitswert oder eine zeit- oder wegabhängige Geschwindigkeitsfunktion sein. Hierzu ist es sinnvoll, die gesamte Ablaufstrecke, bestehend aus Ablaufzone und Richtungsgleise, in mehrere Abschnitte zu unterteilen und für jeden Abschnitt eine frei programmierbare Soll-Ablaufgeschwindigkeit in Form eines konstanten Wertes oder einer, vom Ablaufweg abhängigen Geschwindigkeitsrampe vorzusehen.

Gegenüber bisherigen Bremsverfahren mit Einsatz gestaffelter Gleisbremsen ergibt sich ein wesentlich gleichmäßigerer Lauf der Wagen und damit weitgehend gleichbleibende Abstände zwischen den Abteilungen, so daß eine deutliche Erhöhung der Abdrückgeschwindigkeit und damit der Ablaufleistung möglich ist.

Ein Geschwindigkeitsregler sorgt für die Einhaltung der vorgegebenen Soll-Geschwindigkeit, indem die Soll-Geschwindigkeit laufend mit der aktuellen Ist-Geschwindigkeit verglichen wird und bei entsprechender Abweichung über eine Stelleinrichtung die herkömmliche Wagenbremse betätigt wird.

Durchläuft ein besonders schlecht laufender Wagen die Ablaufzone, so besteht die Gefahr, daß ein nachfolgender Wagen trotz Geschwindigkeitssteuerung unzulässig nahe auffährt. Hierzu ist ergänzend eine Abstandsregelung vorgesehen, die dafür sorgt, daß bei einer Unterschreitung des Mindestabstandes der nachfolgende Wagen so abgebremst wird, daß sich der Abstand zu vorausfahrenden Wagen wieder auf den Mindestwert vergrößert. Dazu ist es notwendig, den Abstand zu vorausbefindlichen Wagen mit Hilfe eines Abstandssensors laufend zu überwachen.

Um schädliche Rangierstöße zu vermeiden und die Ladung zu schonen, ist es erforderlich, die in die Richtungsgleise einlaufenden Güterwagen bei Annäherung an bereits dort stehende oder mit geringer Geschwindigkeit vorausfahrende Wagen zielgenau bis auf eine unschädliche Restgeschwindigkeit abzubremsen. Vorzugsweise wird hierzu in den Richtungsgleisen mit Hilfe eines Abstandssensors die Distanz zu vorausbefindlichen Wagen laufend überwacht und bei Unterschreiten eines Mindestabstandes von etwa 20 bis 30 Metern die Zielbremsung eingeleitet. Die selbsttätige Zielbremsung kann ebenfalls unter Nutzung des Geschwindigkeitsreglers erfolgen, indem eine, nach einer üblichen Bremskurvenfunktion abnehmendem Soll-Geschwindigkeit (Bremswegparabel) als Sollwert auf den Geschwindigkeitsregler aufgeschaltet wird.

Vorzugsweise besteht die Geschwindigkeits-Regeleinrichtung im wesentlichen aus dem Mikrocomputer zur Steuerung und Regelung der Geschwindigkeit und einem steuerbaren Bremsantrieb, mit dessen Hilfe die herkömmliche Bremseinrichtung eines Güterwagens betätigt wird.

Weiterbildungen der Erfindung können die nachstehenden Merkmale umfassen.

Ein, am Radsatz angebrachter Drehimpulsgeber dient der Erfassung des zurückgelegten Ablaufweges und der momentanen Wagengeschwindigkeit. Die Erfassung des Abstandes zu vorausfahrenden oder vorausstehenden Wagen erfolgt mit Hilfe eines Ultraschall-, Mikrowellen- oder Laser-Abstandssensors, der an beiden Wagenseiten angebracht ist und zur Erfassung von Flachwagen auf die Pufferebene der Güterwagen ausgerichtet ist.

Die zur Geschwindigkeitsregelung notwendige Betätigung der Wagenbremse erfolgt entweder mit Hilfe eines Elektroantriebes, der in seiner Kraftwirkung steuerbar ist und über eine Kraftübertragung direkt auf die herkömmliche Wagenbremse einwirkt oder mit Hilfe eines elektronisch gesteuerten, pneumatischen Ventils mit dessen Hilfe der herkömmliche pneumatische Bremszylinder eines Wagens angesteuert wird. Beim Einsatz eines elektropneumatischen Ventils ist jedoch eine ausreichende Druckluftversorgung für den automatischen Wagenablauf, z.B. durch Einsatz eines großen Druckluftspeichers oder eines Luftkompressor, erforderlich.

Die Verbindung der Güterwagen untereinander erfolgt mit automatischen Kupplungen, die ein fernbedientes Abkoppeln sowie ein selbsttätiges Wiederankoppeln ermöglichen, wenn die Güterwagen mit geringer Geschwindigkeit aufeinanderstoßen. Entsprechende Kupplungssysteme sind bekannt oder in Entwicklung.

Die Beobachtung und Steuerung des gesamten Rangierablaufs erfolgt mit Hilfe eines übergeordneten Leitstandes, der hierzu aus einer Rechneranlage mit Monitoren und Bedieneinrichtung besteht. Der zur Steuerung erforderliche bidirektionale Datenaustausch zwischen Güterwagen und Leitstand erfolgt mit Hilfe eines Datenfunksystems. Alternativ zu dem Einsatz eines Datenfunksystems ist zum Informationsaustausch auch der Einsatz einer von Wagen zu Wagen verlaufenden Datenleitung mit dem Triebfahrzeug als Leit- oder Relaisstation oder die Installation einem in den Gleisen verlegten Linienleiters möglich.

Der Leitstand dient im wesentlichen dazu, die einlaufenden Güterwagen zu identifizieren, die Wagen innerhalb der einzelnen Gleise zu erfassen, die Trennstellen des zu rangierenden Zuges festzulegen, die Abkopplung der Wagen an den vorgesehenen Trennstellen über Funk einzuleiten, die Werte für Soll-Ablaufgeschwindigkeit der einzelnen Abteilungen festzulegen und an die Wagen zu übermitteln, die Abdrücklok zu steuern und den Rangierablauf zu überwachen.

Ferner ermöglicht der Leitstand, den Füllungsgrad der Richtungsgleise zu überwachen und an Monitoren darzustellen und die Abfahrbereitschaft der neugebildeten Züge herzustellen und zu überprüfen, indem das ordnungsgemäße Ankoppeln der Wagen überwacht, die Bremsenbetriebsart (Stellung G oder P) in Abhängigkeit von Länge und Gewicht des Zuges fernbedient eingestellt wird und eine vom Leitstand überwachte Bremsprobe durchgeführt sowie ein Bremszettel und eine Wagenliste erstellt wird. Technische Störungen, insbesondere am Kupplungs- oder Bremsensystem, werden von Sensoren am Güterwagen erfaßt, über Datenfunk an den Leitstand gemeldet und als Störmeldung registriert.

Grundsätzlich genügt es, nur die größeren Rangieranlagen mit einem Leitstand auszustatten. Kleinere Rangieranlagen können unter Einsatz des Datenfunksystems von größeren Leitständen aus ferngesteuert werden.

Die Steuerung der Rangierautomatik, die Abkopplung der Wagen sowie die Steuerung, Entlüftung und Überwachung der Bremsen kann gegebenenfalls auch von einem Triebfahrzeug aus als Leitstation erfolgen, wenn das Triebfahrzeug hierzu mit einem Leitgerät ausgestattet ist und eine von Wagen zu Wagen durchgehende Datenübertragung vorhanden ist.

Zur Identifizierung der Wagen dient eine automatische Fahrzeugidentifikation, die aus elektronischen Datenträgern an den Wagen und Sende- und Empfangseinrichtungen an den Einfahrgleisen besteht und in der Lage ist, die Datenträger bei Vorbeifahrt zu lesen und zu beschreiben. Entsprechende Systeme sind bekannt. Die Übertragung der Wagen- und Frachtdaten zum Leitstandrechner erfolgt entweder über eine direkte Datenleitung oder unter Angabe der Gleisnummer über die Datenfunkeinrichtung der Wagen. Mit Hilfe der Identifizierungseinrichtung ist es zudem möglich, bei Vorbeifahrt der Wagen an ortsfesten Sende- und Empfangseinrichtungen, zusätzliche Steuerinformationen während des Ablaufbetriebes zwischen Wagen und Leitstand auszutauschen.

Eine elektronische Anzeige- und Bedieneinrichtung an jeder Wagenseite dient dazu, die wichtigsten Wagen- und Frachtdaten wie Wagennummer, Zielbahnhof, Ladungsgewicht, Name des Kunden oder Art der Ladung einzugeben, abzuspeichern und elektronisch anzuzeigen. Zudem besteht die Möglichkeit, die Wagen- und Frachtdaten zunächst in ein übergeordnetes Rechnersystem einzugeben und dann mit Hilfe des Datenfunksystems auf die Datenspeicher der Wagen zu übertragen. Leerwagen können z.B. auf diese Weise für neue Transportaufträge ferngesteuert disponiert werden.

Ebenso kann mit Hilfe der Anzeige- und Bedieneinrichtung die Rangierautomatik auch manuell vom Güterwagen aus eingeschaltet werden. Die automatische Geschwindigkeitsregelung und insbesondere die selbsttätige Zielbremseinrichtung können somit auch auf kleineren Güterbahnhöfen und Industriegleisanlagen ohne übergeordneten Leitstand als Teilautomatik vorteilhaft genutzt werden. Auch bei der auf kleineren Güterbahnhöfen häufig praktizierten Rangiermethode des Abstoßens kann die integrierte Rangierautomatik zur weitgehenden Automatisierung des Abstoßbetriebes verwendet werden.

Die Rangierautomatik erlaubt auch das Rangieren zusammenhängender, größerer Wagengruppen. Da bei größeren Wagengruppen der vorauslaufende Wagen bei einer höheren Ausgangsgeschwindigkeit nicht in der Lage ist, bei einer Zielbremsung die gesamte Gruppe bei 20 bis 30 Metern Bremsweg ausreichend abzubremsen, ist es erforderlich, die Einlaufgeschwindigkeit in die Richtungsgleise so niedrig zu wählen, daß der vorauslaufende Wagen allein in der Lage ist, die nachfolgenden Wagen abzubremsen. Die jeweils für die einzelnen Wagengruppen gültige Soll-Einlaufgeschwindigkeit in die Richtungsgleise wird ebenfalls vom Leitstand festgelegt und über Datenfunk an die Wagen übermittelt.

Ferner besteht die Möglichkeit, eine von Wagen zu Wagen durchgehende Steuerleitung vorzusehen, über die der führende Wagen bei einer Zielbremsung ein Bremssignal an nachfolgende Wagen weiterleiten kann, so daß auch die nachfolgenden Wagen an der Zielbremsung teilnehmen.

Zur Vermeidung einer Gefährdung des Eisenbahnverkehrs außerhalb der Rangieranlagen ist es erforderlich, ein unbeabsichtigtes Abkoppeln der Wagen und Lösen der Bremsen und damit ein unkontrolliertes Auseinanderfallen eines Zuges technisch auszuschließen. Eine Fehlbedienung der sicherheitsrelevanten automatischen Kupplung oder Bremsenentlüftungseinrichtung kann z.B. infolge einer Störung des Steuerungscomputers, des Leitstandrechners oder infolge einer fehlerhaften Datenübermittlung auftreten.

Zur Vermeidung einer Fehlbedienung wird eine zusätzliche Sicherheitsschaltung an den Güterwagen vorgesehen, die ein fernbedientes Abkoppeln der Wagen und Entlüften und damit Lösen der Bremsen nur dann zuläßt, wenn einerseits die Hauptluftleitung drucklos ist und zudem eine zusätzliches Freigabesignal anliegt. Ein entsprechendes Freigabesignal kann z.B. von einem, an den Einfahrgleisen angebrachten, linienförmigen Signalübertragungsleiter in Form eines einfachen induktiven Signals zum Güterwagen übertragen werden, so daß ein Abkoppeln der Wagen und Betätigen der Bremsenentlüftungseinrichtung nur möglich ist, wenn das Freigabesignal anliegt.

Ein wesentlicher wirtschaftlicher Vorteil der Erfindung besteht darin, daß die vorhandene Infrastruktur der Rangieranlagen mit Ablaufberg, Weichenverteilzone und leicht geneigten Richtungsgleisen unverändert weiter genutzt werden kann. Aufgrund des relativ geringen Rollwiderstandes der Güterwagen laufen diese auch ohne zusätzlichen Antrieb ab, so daß zur Durchführung des Rangierbetriebes ein eigener, kostenintensiver Fahrantrieb für die Güterwagen nicht erforderlich ist. Es kann jedoch sinnvoll sein, einzelne Güterwagen mit einem eigenen Fahrantrieb auszustatten, um diese beispielsweise in einem Güterbahnhof oder Gleisanschluß zur Erleichterung des Lade- und Entladebetriebes ohne Rangierlok bewegen zu können. Die Erfindung bezieht sich daher insbesondere auf eigenantriebslose Güterwagen, jedoch auch auf solche mit einem einfachen Fahrantrieb.

Für selbstangetriebene Fahrzeuge, wie fahrerlose Transportsysteme oder automatische Personenbeförderungssysteme, sind automatische Fahr- und Bremssteuerungen eigentlich nichts neues. Die Besonderheit der Erfindung besteht darin, daß hier eigenantriebslose Güterwagen, die dazu vorgesehen sind, von einer Lokomotive im Zugverband gezogen oder geschoben zu werden und deshalb grundsätzlich keine selbsttätige Fahr- und Bremssteuerung benötigen, mit einer integrierten Rangierautomatik ausgestattet werden, um erfindungsgemäß nicht den Fahrbetrieb auf Streckengleisen sondern den Rangierbetrieb in Rangieranlagen zu automatisieren.

Die Erfindung weist insbesondere folgenden Vorteile auf:
- Die Rangierautomatik ermöglicht auf allen Rangieranlagen, Güterbahnhöfen und Industriegleisanlagen einen vollautomatischen Rangierbetrieb.
- Die Personalkosten können mit Hilfe der Rangierautomatik drastisch gesenkt werden.
- Der Rangierbetrieb kann durch Verkürzung der Behandlungszeit und Erhöhung der Ablaufleistung wesentlich beschleunigt werden, so daß die Transportzeit gesenkt und durch intensivere Nutzung ein wesentlicher Teil der Güterwagen eingespart werden kann.
- Durch Großserienproduktion der für die Rangierautomatik benötigten elektronischen Komponenten und Nachrüstung vorhandener Wagen in Werkstätten ergeben sich vergleichsweise geringe Gesamtkosten.
- Schädliche Rangierstöße werden völlig vermieden, so daß Wagen und Ladung geschont werden.

Anhand eines Ausführungsbeispiels ist die Erfindung näher erläutert.
- Fig. 1: zeigt einen Güterwagen mit integrierter Rangierautomatik,
- Fig. 2: zeigt die Steuerungs- und Regelungsstruktur der integrierter Rangierautomatik für Güterwagen,
- Fig. 3: zeigt schematisch den Übersichtsplan einer vollautomatischen Rangieranlage mit Gleisanlagen und Leitstand sowie das Geschwindigkeitsprofil der selbsttätig ablaufenden Güterwagen.

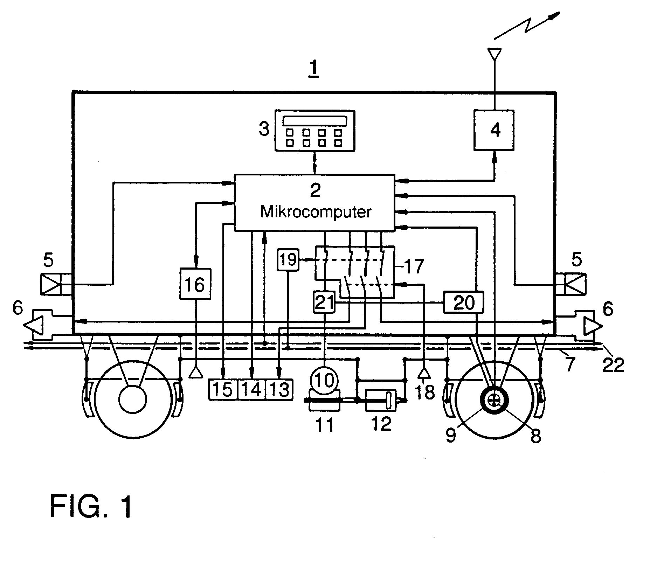

Für die Durchführung eines vollautomatischen Rangierbetriebes ist jeder Güterwagen gemäß Fig. 1 mit einer in die Wagen integrierten Rangierautomatik ausgestattet. Die Steuerung der Rangierautomatik und Regelung der Geschwindigkeit erfolgt mit einem Steuerungscomputer 2, der z.B. aus einem Mikrocomputer oder einer Speicherprogrammierbaren Steuerung (SPS) besteht.

Ferner ist jeder Wagen mit einer Anzeige- und Bedieneinrichtung 3, einer Datenfunkanlage 4, einem Identifizierungsdatenträger 16, in beiden Fahrtrichtungen angebrachten Laser- oder Mikrowellen-Abstandssensoren 5, einem Drehimpulsgeber 8, automatischen Kupplungen 6, einem steuerbaren Bremsantrieb 10 mit Stellgetriebe 11 zur Betätigung der Betriebsbremse 12, einer Stellvorrichtung 13 zum Entlüften der Betriebsbremse, einer Umstellvorrichtung 14 für die Einstellung der Bremsenbetriebsart und gegebenenfalls eine Umstellvorrichtung 15 zur Einstellung der Bremskraft ausgestattet. Die Überwachung der Betriebsbremseinrichtung 12 und der automatischen Kupplungen 6 erfolgt mit nicht näher dargestellten Sensoren, die in Verbindung mit der Steuereinheit 2 stehen. Der Datenträger 16 steht ebenfalls über eine Datenleitung in Verbindung mit der Steuereinheit 2, so daß zwischen Datenträger und Steuereinheit Informationen, wie z.B. Fracht- und Wagendaten ausgetauscht werden können.

Die Versorgung der Elektronik und Stellmotoren mit elektrischer Energie erfolgt aus einer Batterie 20, die über einen Achsengenerator 9 oder eine Zugsammelschiene während der Zugfahrt wieder aufgeladen wird.

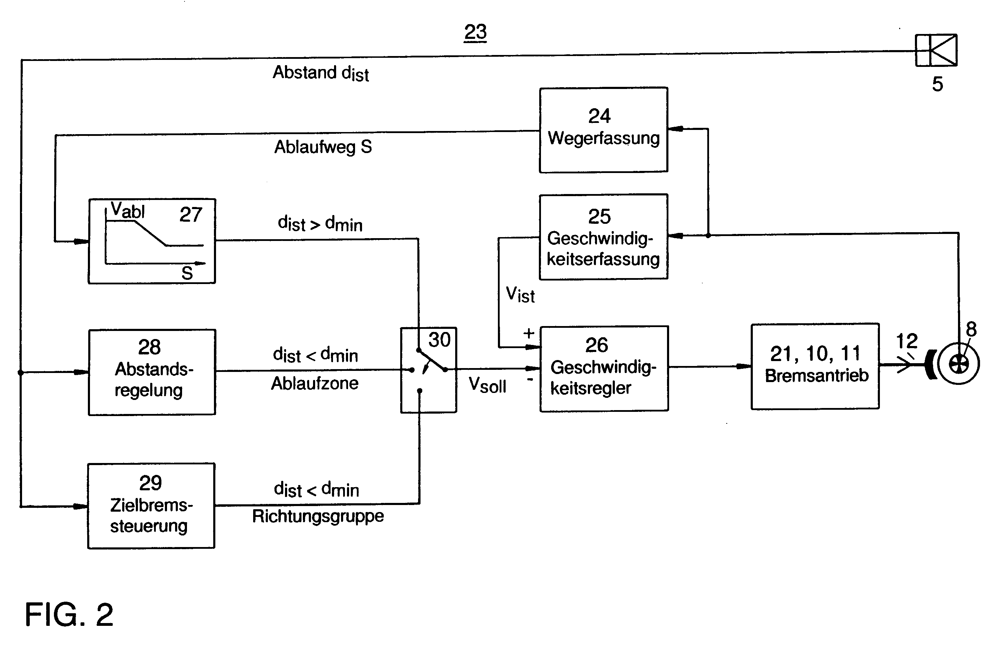

Die Wagensteuereinheit 2 verfügt gemäß Fig. 2 über eine Steuer- und Regeleinrichtung 23 zur Steuerung des automatischen Wagenablaufs und zur Regelung der Ablaufgeschwindigkeit. Ein digitaler Geschwindigkeitsregler 26 sorgt für die Einhaltung der Soll-Geschwindigkeit während des Wagenablaufs. Im Steuerblock 27 wird die Soll-Ablaufgeschwindigkeit ermittelt und über den Umschalter 30 auf den Geschwindigkeitsregler 26 aufgeschaltet.

Die Soll-Ablaufgeschwindigkeit ist entweder ein konstanter Wert oder eine abschnittsweise wegabhängige Geschwindigkeitsfunktion, z.B. in Form einer Geschwindigkeitsrampe. Die bei Unterschreitung des Mindestabstandes in der Ablaufzone vorgesehene Abstandsregelung (dᵢₛₜ < dₘᵢₙ), erfolgt in der Abstandsregelungsschaltung 28. Bei Unterschreitung des Mindestabstandes (dᵢₛₜ < dₘᵢₙ) in den Richtungsgleisen wird von der Zielbremssteuerung 29 eine Zielbremsung eingeleitet, so daß die Wagen ohne Auflaufstöße an vorausstehende oder mit geringer Geschwindigkeit vorausfahrende Wagen ankoppeln können. Die von der Abstandsregelung 28 und der Zielbremssteuerung 29 ermittelten Soll-Geschwindigkeitswerte werden bei entsprechender Unterschreitung des Mindestabstandes dₘᵢₙ über den Umschalter 30 ebenfalls als Sollwerte auf den Geschwindigkeitsregler 26 aufgeschaltet.

Der Drehimpulsgeber 8 liefert wegproportionale Impulse. Im Programmblock 24 wird aus den Impulsen der Ablaufweg S und im Programmblock 25 die Ist-Geschwindigkeit Vᵢₛₜ ermittelt. Durch Vergleich der Ist-Geschwindigkeit mit der Soll-Geschwindigkeit ermittelt der Geschwindigkeitsregler 26 bei zu hoher Ist-Geschwindigkeit ein Stellsignal für das Steuergerät 21, das den Bremsantrieb 10 ansteuert. Über das Stellgetriebe 11 wird die Bremskraft des Bremsantriebes 10 auf die herkömmliche Bremsanlage 12 des Wagens übertragen und so die Ist-Geschwindigkeit der Soll-Geschwindigkeit angepaßt. Ist die aktuelle Geschwindigkeit kleiner als die Soll-Geschwindigkeit, so erfolgt keine Bremsung sondern eine Beschleunigung durch die Hangabtriebskraft am Ablaufberg, so daß ein eigener Fahrantrieb nicht erforderlich ist.

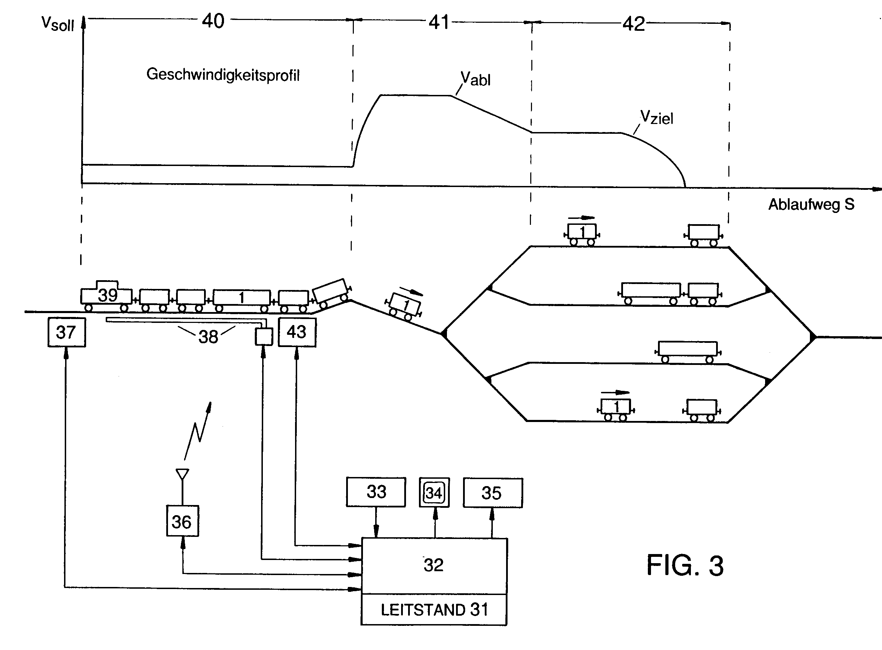

Fig. 3 zeigt eine Rangieranlage mit Einfahrgleisen 40, Ablaufzone 41 und Richtungsgleisen 42 und zugehörigem Geschwindigkeitsprofil Vₛₒₗₗ für die Ablaufgeschwindigkeit V_{abl} und die Zielbremsung V_{ziel}. Die Steuerung des Rangierbetriebes erfolgt mit Hilfe eines übergeordneten Leitstandes 31, der hierzu mit einem Leitstandrechner 32, einer Bedieneinrichtung 33, Monitoren 34, einer Datenfunk-Sende- und Empfangsanlage 36 für den Informationsaustausch mit den Güterwagen und einer Sende- und Empfangseinrichtung 37 zur Identifizierung der einlaufenden Wagen ausgestattet ist. Zur automatischen Steuerung der Ablaufweichen besteht eine Verbindung zum Stellwerk 35.

Bei Einlauf eines Güterzuges in ein Einfahrgleis 40 wird zunächst die Identität der einzelnen Wagen mit Hilfe der an den Gleisen angebrachten Identifizierungseinrichtung 37 und der Datenträger 16 an den Güterwagen bei Vorbeifahrt automatisch erfaßt und mit Angabe der für den Rangierbetrieb wichtigen Daten wie Wagennummer, Zielbahnhof und Ladungsgewicht zum Leitstandrechner 32 gemeldet und dort zwischengespeichert und an einem Monitor 34 dargestellt. Mit Hilfe eines Zug-Zerlegeprogramms werden vom Leitstandrechner 32 die Trennstellen der einzelnen Wagen bzw. Wagengruppen festgelegt und die Richtungsgleise bestimmt, in die diese Abteilungen zu rangieren sind.

Anschließend werden vom Leitstandrechner 32 per Datenfunk 36 an jeden einzelnen Wagen Steueranweisungen übermittelt, um die Abkopplung der Wagen gemäß Zerlegeplan einzuleiten, die Bremsen durch Betätigung des Entlüftungsventils 13 zu lösen und die Steuer- und Regeleinrichtung 23 für den automatischen Wagenablauf einzuschalten sowie die Werte für die Soll-Ablaufgeschwindigkeit an die Wagen zu übermitteln. Alternativ zur Vorgabe durch den Leitstand kann die Geschwindigkeitsregelung auch nach Sollwerten erfolgen, die in der Steuereinheit 2 fest vorprogrammiert sind.

Die Abkopplung der Wagen kann gegebenenfalls auch unmittelbar während des Abdrückvorganges erfolgen, bevor die Wagen den Ablaufberg erreichen, so daß jeweils nur die vorderen Wagen im Bereich des Ablaufberges abgekoppelt sind und damit der Zug bei einer Unterbrechung des Rangierbetriebes besser bremsbar bleibt.

Eine, an den Einfahrgleisen 40 installierte linienförmige, induktive Signalübertragung 38 und ein Empfänger 18 mit Sicherheitsschaltung 17 und Druckschalter 19 an den Güterwagen verhindert zuverlässig ein unbeabsichtigtes Abkoppeln der Wagen und Lösen der Bremsen außerhalb der Einfahrgleise. Die Abkopplung der Wagen und Entlüftung der Bremsen erfolgt nur dann, wenn ein entsprechender Steuerbefehl des Leitstandrechners anliegt, die Hauptluftleitung 7 drucklos ist und ein Freigabesignal an der linienförmigen Signalübertragung 38 anliegt.

Nach Herstellung der Rangierbereitschaft werden die entkoppelten Wagen von einer ferngesteuerten Rangierlok 39 oder einer Streckenlok über den Ablaufberg geschoben. Unter Einwirkung der Hangabtriebskraft beschleunigen die einzelnen Wagen oder Wagengruppen auf der Talseite des Ablaufberges, so daß sich zwischen den Abteilungen Abstände bilden, die dazu genutzt werden, die Weichen so umzustellen, daß die Wagen das für sie bestimmte Richtungsgleis erreichen.

Sobald die Wagen am Ablaufberg eine Geschwindigkeit von 5 m/s überschreiten, wird die Erfassung des Ablaufweges S gestartet und die Geschwindigkeitsregelung 26 aktiviert. Im ersten Abschnitt der Ablaufzone 41 werden die Wagen auf eine konstante Soll-Geschwindigkeit V_{abl} von 7 m/s abgebremst. Im zweiten Teil der Ablaufzone wird eine Geschwindigkeitsrampe von 7 m/s am Anfang der Rampe auf 5 m/s am Ende der Ablaufzone als Soll-Geschwindigkeit vorgegeben. Wird während des Wagenablaufs in der Ablaufzone 41 trotz gleichmäßigen Geschwindigkeitsverlaufs der Mindestabstand dₘᵢₙ zu vorausfahrenden Wagen unterschritten, so wird die Abstandsregelung 28 aktiviert, die dafür sorgt, daß durch Aufschalten einer geringeren Soll-Geschwindigkeit der Mindestabstand dₘᵢₙ wieder hergestellt wird, und somit die Weichen ungehindert umgestellt werden können.

Die Soll-Geschwindigkeit bei Einfahrt in die Richtungsgleise beträgt bei Einzelwagen 5 m/s. Bei größeren Wagengruppen wird je nach Anzahl der nachfolgenden Wagen die Einfahrgeschwindigkeit in die Richtungsgleise auf 2 bis 4 m/s begrenzt, um sicherzustellen, daß der vorauslaufende Wagen in der Lage ist, die nachfolgenden bei einer Zielbremsung mit abzubremsen. Ist eine von Wagen zu Wagen durchgehende Steuerleitung 22 verfügbar, über die der führende Wagen ein Bremssignal an die nachfolgenden Wagen weiterleiten kann, so daß diese an der Zielbremsung mit teilnehmen, so kann die Einfahrgeschwindigkeit auch höher festgelegt werden.

Nach Einlauf der Wagen in die Richtungsgleise 42 wird der Abstand zu vorausstehenden oder vorausfahrenden Wagen mit Hilfe eines Abstandssensors 5 ständig überwacht. Bei Unterschreiten eines Abstandes von etwa 20 bis 30 Metern wird eine Zielbremsung eingeleitet, indem von der Zielbremssteuerung 29 eine mit dem Abstand abnehmende Soll-Geschwindigkeit Vₛₒₗₗ auf den Geschwindigkeitsregler 26 aufgeschaltet wird. Eine Zielbremsung mit Ankopplung erfolgt auch dann, wenn der vorausbefindliche Wagen nicht steht sondern mit geringer Geschwindigkeit vorausfährt. Weist der vorausfahrende Wagen jedoch eine höhere Geschwindigkeit auf, so wird der nachfolgende Wagen durch die Abstandsregelung 28 zunächst auf Distanz gehalten und erst nach einer weiteren Reduzierung der Geschwindigkeit eine Zielbremsung eingeleitet, um Bremsprobleme zu vermeiden, wie sie bei größeren Wagengruppen auftreten, wenn nur der führende Wagen die Zielbremsung ausführt.

Bei einer Differenz-Geschwindigkeit von etwa 0,5 m/s und einem Restabstand von einem Meter werden die Bremsen gelöst und der nachfolgende Wagen an den vorausbefindlichen Wagen mit Hilfe der automatischen Kupplungen 6 selbsttätig angekoppelt. Gleichzeitig werden die Bremsleitungen sowie gegebenenfalls elektrische Steuer- und Versorgungsleitungen von Wagen zu Wagen durchgekuppelt.

Befindet sich noch kein vorausliegender Wagen in den Richtungsgleisen, so erfolgt die Abbremsung am Ende der Richtungsgleise 42 entweder durch einen ausfahrbaren Prellbock, der ebenfalls eine Zielbremsung auslöst oder durch eine wegabhängige Stoppanweisung des Steuerblocks 27 oder durch eine Stoppanweisung, die mit Hilfe eines, am Ende der Richtungsgleise angebrachten Identifizierungssenders 37 zu dem Empfänger 16 und der Steuereinheit 2 des Wagens übertragen wird.

Der jeweilige Füllungsgrad der Richtungsgleise mit Güterwagen wird vom Leitstand aus überwacht und an Monitoren dargestellt. Nach ausreichender Füllung der Richtungsgleise erfolgt unter Einsatz des übergeordneten Leitstandes und der integrierten Rangierautomatik die Herstellung und Überprüfung der Abfahrbereitschaft der neugebildeten Züge. Je nach Länge und Gewicht des Güterzuges wird vom Leitstand aus über Datenfunk die Bremsstellung P oder G oder eine Kombination aus beiden Bremsstellungen eingestellt.

Nachdem am letzten Wagen das Bremsventil manuell oder ferngesteuert geschlossen wurde und eine Lok oder eine stationäre Bremsluftfüllanlage an den Zug angekoppelt wurde erfolgt eine Bremsprobe, indem die Bremsleitungen zunächst gefüllt, anschließend die Bremsen durch Absenken des Luftdruckes betätigt und dann wieder durch Erhöhen des Druckes gelöst werden. Über Datenfunk wird hierbei jeder Güterwagen abgefragt, ob die Bremsen zunächst anlegen und nach Erhöhung des Bremsdruckes ordnungsgemäß wieder lösen. Das Ergebnis wird an einem Monitor 34 des Leitstandes dargestellt, so daß mögliche Störungen der Betriebsbremsen 12 an einzelnen Wagen sofort festgestellt und gegebenenfalls durch Fachpersonal vor Ort behoben werden können.

Güterwagen, die bisher mit einer herkömmlichen manuellen Umschaltvorrichtung zur Einstellung der Bremskraft versehen sind, werden zur selbsttätigen Einstellung der Bremskraft mit einer, von der Steuereinheit 2 betätigten Umschalteinrichtung 15 ausgestattet, die eine automatische Umstellung der Bremskraft in Abhängigkeit vom aktuellen, im Datenspeicher der Steuereinheit 2 hinterlegten Ladegewichtes erlaubt.

Eine zusätzliche Sicherheitsschaltung 17 verhindert eine unbeabsichtigte Betätigung des Rangier-Bremsantriebes 10 während einer Zugfahrt, indem mit einem Druckschalter 19 die elektrische Verbindung zum Bremsantrieb 10 bei gefüllter Hauptluftbremsleitung 7 unterbrochen wird.

Auf großen Rangieranlagen kann zur Überprüfung der Laufwerke eine automatische Radsatzdiagnoseanlage 43 im Bereich des Ablaufberges vorgesehen werden, mit deren Hilfe mögliche Schäden an den Laufwerken und Radsätzen im Durchfahrbetrieb erfaßt und an den Leitstand 31 gemeldet werden können.

Mit Hilfe des Leitstandrechners 32 werden die wichtigsten Daten des neugebildeten Zuges wie Länge, Gesamtgewicht, Bremsgewicht, Zahl der Achsen und besondere Merkmale, wie Gefahrengut erfaßt und in Form eines Bremszettels und einer Wagenliste an den Triebfahrzeugführer und an übergeordnete Rechnersysteme übermittelt. Die Zugbildung ist damit abgeschlossen und die Abfahrbereitschaft hergestellt. Der gesamte Rangierablauf erfolgt vollautomatisch, so daß manuelle Tätigkeiten im Bereich der Gleisanlagen praktisch vollständig entfallen.

Die Rangierautomatik kann auch auf kleineren Rangieranlagen ohne Leitstand oder bei einer Störung des Leitstandes vorteilhaft als Teilautomatik genutzt werden. In diesem Fall werden die Güterwagen von Hand entkuppelt und die Rangierautomatik mit den Funktionen Geschwindigkeits- und Abstandsregelung und selbsttätige Zielbremssteuerung durch Betätigung eines Drucktasters an der Anzeige- und Bedieneinrichtung 3 eingeschaltet und die Wagen dann über den Ablaufberg geschoben. Die Geschwindigkeitsregelung in der Ablaufzone und die Zielbremsung mit Wiederankopplung in den Richtungsgleisen erfolgen auch hier vollautomatisch, so daß ein Leitstand nicht in jedem Fall erforderlich ist.

Ebenfalls kann mit der integrierten Rangierautomatik auch die Rangiermethode des Abstoßens, die häufig auf kleineren Anlagen ohne Ablaufberg praktiziert wird, weitgehend automatisiert werden. Nach einer ferngesteuerten oder manuellen Einschaltung der Automatik und Abkopplung des jeweils letzten Wagens wird der letzte Wagen durch kurzzeitiges Beschleunigen und Abbremsen des Zuges abgestoßen und so in das vorgesehene Richtungsgleis geleitet. Die Zielbremsung und Ankopplung erfolgt auch hier automatisch.

### Bezugszeichenliste:

- 1: Güterwagen mit integrierter Rangierautomatik
- 2: Steuerungscomputer
- 3: Anzeige- und Bedieneinrichtung
- 4: Datenfunkeinrichtung Güterwagen
- 5: Mikrowellen- oder Laser-Abstandssensor
- 6: automatische Kupplung
- 7: Hauptluftbremsleitung
- 8: Drehimpulsgeber
- 9: Generator
- 10: Antriebsmotor für Rangier-Bremsantrieb
- 11: Getriebe mit Kraftübertragung für Bremsantrieb
- 12: Bremsanlage Güterwagen
- 13: Entlüftungseinrichtung
- 14: Umstelleinrichtung für Bremsenbetriebsart
- 15: Umstelleinrichtung für Bremskraft
- 16: Identifizierungs-Datenträger
- 17: Sicherheitsschaltung
- 18: induktiver Signalempfänger für Freigabe der Sicherheitsschaltung
- 19: Druckschalter für Sicherheitsschaltung
- 20: Batterie
- 21: Steuergerät für Bremsantrieb
- 22: Zug-Steuerleitung
- 23: Steuer- und Regelschaltung für die Rangierautomatik
- 24: Wegerfassung
- 25: Geschwindigkeitserfassung
- 26: Geschwindigkeitsregler
- 27: Blockschaltung für Ermittlung der Soll-Ablaufgeschwindigkeit
- 28: Abstandsregelung
- 29: Zielbremssteuerung
- 30: Umschalter für Soll-Geschwindigkeit
- 31: Leitstand
- 32: Leitstandrechner
- 33: Bedieneinrichtung Leitstand
- 34: Monitor
- 35: Stellwerk
- 36: Datenfunk-Sende- und Empfangseinheit Leitstand
- 37: Sende- und Empfangseinheit für Identifizierung
- 38: linienförmige Signalübertragung
- 39: Rangierlok
- 40: Einfahrgleise
- 41: Ablaufzone
- 42: Richtungsgleise
- 43: Radsatzdiagnoseanlage

## Patentansprüche

1. Verfahren zum Automatisieren des Rangierbetriebes von schienengebundenen Güterwagen, insbesondere eigenantriebslosen Güterwagen, auf Rangieranlagen mit Ablaufanlage, wobei eine Einhaltung einer vorgegebenen Soll-Ablaufgeschwindigkeit (V_{abl}) in einem Ablaufbereich (41, 42), der eine Ablaufzone (41) mit einer Weichenverteilzone une Richtungsgleise (42) umfaßt, und eine zielgenaue Abbremsung der Güterwagen in den Richtungsgleisen (42) bei Annäherung an vorausbefindliche Wagen durch eine selbsttätig wirkende, in die Güterwagen (1) integrierte, elektronische Steuer- und Regeleinrichtung (23) unter Nutzung der Wagenbremse (12) erfolgen, dadurch gekennzeichnet, daß eine Einhaltung eines Mindestabstandes (dₘᵢₙ) zwischen den Güterwagen in der Ablaufzone (41) durch die Steuer- und Regeleinrichtung (23) unter Nutzung der Wagenbremse (12) erfolgt.

2. Verfahren nach Anspruch 1, dadurch gekennzeichnet, daß eine Aktivierung der selbsttätig wirkenden Steuer- und Regeleinrichtung (23), eine Abkopplung (6) der Wagen, eine Entlüftung der Bremsen (13), eine Einstellung der Bremsenbetriebsart (14), eine Kontrolle der Funktionsbereitschaft der Wagenbremse (12) und von automatischen Kupplungen (6) von einem Leitstand (31) aus, unter Einsatz einer Datenfernübertragung (36, 4), erfolgt.

3. Verfahren nach Anspruch 1 oder 2, dadurch gekennzeichnet, daß die wegabhängige Soll-Ablaufgeschwindigkeit (V_{abl}) für einen Ablaufweg (S) entweder in einer Steuereinheit (2) fest vorprogrammiert ist oder von einem Leitstand (31) aus, unter Einsatz einer Datenfernübertragung (36, 4) vorgegeben wird.

4. Verfahren nach Anspruch 1, 2 oder 3, dadurch gekennzeichnet, daß im Bereich der Ablaufzone (41) eine in die Güterwagen integrierte Abstandsregelung (28) die Einhaltung eines Mindestabstandes (dₘᵢₙ) zu vorauslaufenden Wagen bewirkt und daß im Bereich der Richtungsgleise (42) bei Annäherung der Wagen an vorausbefindliche Wagen ebenfalls eine Abstandsregelung (28) die Einhaltung eines Mindestabstandes (dₘᵢₙ) bewirkt, sofern die Geschwindigkeit des vorausbefindlichen Wagens größer ist als eine vorgegebene Grenzgeschwindigkeit und daß im Bereich der Richtungsgleise (42) eine selbsttätige Zielbremsung (29) mit anschließender Ankopplung durchgeführt wird, wenn die Geschwindigkeit des vorausbefindlichen Wagens kleiner ist als die vorgegebene Grenzgeschwindigkeit.

5. Rangierautomatik für schienengebundene Güterwagen, insbesondere eigenantriebslose Güterwagen, zum Automatisieren des Rangierbetriebes auf Rangieranlagen mit Ablaufanlage in einem Ablaufbereich mit einer Ablaufzone (41) und Richtungsgleise (42), wobei die Güterwagen (1) eine selbsttätig wirkende Steuer- und Regeleinrichtung (23) zur Einhaltung einer vorgegebenen Soll-Ablaufgeschwindigkeit (V_{abl}) im Ablaufbereich (41, 42) und eine Steuer- und Regeleinrichtung (23) zur Durchführung einer Zielbremsung bei Annäherung an vorausbefindliche Wagen aufweisen und hierzu mit einer Steuereinheit (2), Sensoren (5, 8) und einer Bremseinrichtung (10, 11, 12) ausgestattet sind, dadurch gekennzeichnet, daß die selbsttätig wirkende Steuer- und Regeleinrichtung (23) eine Abstandsregelung (28) aufweist, die in der Ablaufzone (41) die Einhaltung eines Mindestabstandes (dₘᵢₙ) zu vorausbefindlichen Wagen bewirkt.

6. Rangierautomatik nach Anspruch 5, dadurch gekennzeichnet, daß die selbsttätig wirkende Steuer- und Regeleinrichtung (23) eine Steuerschaltung (27) aufweist, die die aktuelle Soll-Ablaufgeschwindigkeit (V_{abl}) in Abhängigkeit vom zurückgelegten Ablaufweg (S) und vorgegebenen Geschwindigkeitswerten ermittelt, die von einem Leitstand (31) oder der Steuereinheit (2) als Sollwerte vorgegeben werden.

7. Rangierautomatik nach Anspruche 6, dadurch gekennzeichnet, daß die selbsttätig wirkende Steuer- und Regeleinrichtung (23) eine Steuerschaltung (30) aufweist, die bei ausreichendem Wagenabstand den von der Steuerschaltung (27) ermittelten Wert für die Soll-Ablaufgeschwindigkeit (V_{abl}) auf einen Geschwindigkeitsregler (26) aufschaltet und bei Unterschreitung eines Mindestabstandes (dₘᵢₙ) in der Ablaufzone (41) die Abstandsregelung (28) aktiviert sowie bei Unterschreitung des Mindestabstandes (dₘᵢₙ) in den Richtungsgleisen (42) eine Zielbremseinrichtung (29) aktiviert, die dafür sorgt, daß die Wagen bei Annäherung an vorausbefindliche Wagen zielgenau abgebremst und selbsttätig ankoppelt werden, wobei von der Abstandsregelung (28) bzw. der Zielbremssteuerung (29) ermittelte Sollwerte für die Geschwindigkeit (Vₛₒₗₗ) ebenfalls auf den Geschwindigkeitsregler (26) aufgeschaltet werden.

8. Rangierautomatik nach einem der Ansprüche 5 bis 7, dadurch gekennzeichnet, daß die Wagen mit Sensoren (8) zur Erfassung des zurückgelegten Ablaufweges (S) und der Geschwindigkeit (Vᵢₛₜ) und mit Sensoren (5) zur Erfassung des Abstandes (dᵢₛₜ) zu vorausfahrenden oder vorausstehenden Wagen ausgestattet sind, wobei die Sensoren (5) zur Erfassung des Abstandes Laser-, Mikrowellen- oder Ultraschallsensoren sind.

9. Rangierautomatik nach einem der Ansprüche 5 bis 8, dadurch gekennzeichnet, daß die Steuereinheit (2) ein Mikrocomputer oder eine speicherprogrammierbare Steuerung mit zugehöriger Ein- und Ausgabeeinheit und zugehörigem Steuerprogramm ist.

10. Rangierautomatik nach einem der Ansprüche 5 bis 9, dadurch gekennzeichnet, daß die Steuer- und Regeleinrichtung (23) einen Geschwindigkeitsregler (26) aufweist, der über einen Bremsantrieb (21, 10, 11) direkt auf die Wagenbremse (12) einwirkt und durch einen Vergleich der Ist-Geschwindigkeit (Vᵢₛₜ) mit der Soll-Geschwindigkeit (Vₛₒₗₗ) die Einhaltung der vorgegebenen Soll-Geschwindigkeit (Vₛₒₗₗ) bewirkt.

11. Rangierautomatik nach Anspruch 10, dadurch gekennzeichnet, daß der Bremsantrieb (21, 10, 11) ein steuerbares Stellglied (21) und einen Elektroantrieb (10) aufweist, wobei der Elektroantrieb (10) mit Hilfe einer Kraftübertragung (11) direkt auf die herkömmliche Wagenbremse (12) des Güterwagens einwirkt.

12. Rangierautomatik nach Anspruche 10, dadurch gekennzeichnet, daß der Bremsantrieb ein elektronisch gesteuertes, pneumatisches Ventil aufweist, mit dessen Hilfe ein pneumatischer Bremszylinder der Wagenbremse (12) von der Steuereinheit (2) während des Wagenablaufs angesteuert werden kann.

13. Rangierautomatik nach einem der Ansprüche 5 bis 12, dadurch gekennzeichnet, daß die Wagen eine fernbedienbare Stelleinrichtung (13) zum Entlüften der Wagenbremse (12), eine fernbedienbare Stelleinrichtung (14) zum Einstellen der Bremsenbetriebsart (G, P) und / oder eine Umschalteinrichtung (15) aufweisen, die eine automatische Einstellung der Bremskraft in Abhängigkeit vom aktuellen, in einem Datenspeicher der Steuereinheit (2) hinterlegten Ladegewichtes erlaubt.

14. Rangierautomatik nach einem der Ansprüche 5 bis 13, dadurch gekennzeichnet, daß die Wagen mit automatischen Kupplungen (6) ausgestattet sind, die beim Aufstoßen auf einen anderen Wagen selbsttätig schließen und durch eine Hebeleinrichtung oder eine elektrisch betätigte Stelleinrichtung geöffnet werden können.

15. Rangierautomatik nach einem der Ansprüche 5 bis 14, dadurch gekennzeichnet, daß die Wagen mit einer Anzeige- und Bedieneinrichtung (3) ausgestattet sind, die eine Anzeige und Eingabe der aktuellen Frachtdaten, sowie ein Einschalten der Steuer- und Regeleinrichtung (23) zur Durchführung der Regelung der Soll-Ablaufgeschwindigkeit (V_{abl}) und der Zielbremsung ermöglicht sowie mit einem Identifikations-Datenträger (16) ausgerüstet sind, der in Verbindung mit der Steuereinheit (2) steht und von an den Gleisen angebrachten Identifizierungseinrichtungen (37) gelesen und / oder beschrieben werden kann.

16. Rangierautomatik nach einem der Ansprüche 5 bis 16, dadurch gekennzeichnet, daß die Rangieranlage einen Leitstand (31) aufweist, der dazu ausgerüstet ist, die Aktivierung der Steuer- und Regeleinrichtung (23) der Güterwagen zu bewirken, die Soll-Ablaufgeschwindigkeit (V_{abl}) für den automatischen Wagenablauf festzulegen, die einlaufenden Wagen zu identifizieren, die Abkopplung der Wagen an den vorgesehenen Trennstellen einzuleiten, die Bremsen zu entlüften und die Kupplungs- und Bremsenfunktionen der Wagen fernbedient zu überprüfen und hierzu der Leitstand und die Wagen mit einer Datenfernübertragungseinrichtung (36, 4) ausgestattet sind, die einen Austausch von Informationen und Steueranweisungen zwischen Leitstand (31) und Güterwagen (1) ermöglicht.

17. Rangierautomatik nach Anspruch 16, dadurch gekennzeichnet, daß der Leitstand (31) als kompaktes Leitgerät in einer Lokomotive (39) angeordnet ist und die Datenübertragung zwischen Leitgerät und Güterwagen über eine Datenleitung (22) erfolgt.

18. Rangierautomatik nach einem der Ansprüche 5 bis 17, dadurch gekennzeichnet, daß die Wagen eine Daten- und Steuerleitung (22) aufweisen, die über die automatische Kupplung (6) von Wagen zu Wagen durchgebunden werden kann, mit der Steuereinheit (2) in Verbindung steht und mit deren Hilfe beim Wagenablauf ein vorauslaufender Wagen ein Bremssignal oder den Wert für die Soll-Geschwindigkeit (Vₛₒₗₗ) an nachfolgende Wagen weiterleiten kann, so daß bei einer Abstandsregelung oder Zielbremsung vom führenden Wagen aus die Bremseinrichtungen (10, 11, 12) der nachfolgenden Wagen angesteuert und betätigt werden können.

19. Rangierautomatik nach einem der Ansprüche 5 bis 18, dadurch gekennzeichnet, daß die Wagen mit einer Sicherheitsschaltung (17), mit einem Signalempfänger (18) und einem Druckschalter (19) und mindestens Einfahrgleise (40) mit einem linienförmigen Signalleiter (38) ausgestattet sind, die eine Betätigung von automatischen Kupplungen (6) und einer Bremsen-Entlüftungseinrichtung (13) nur dann zulassen, wenn ein Freigabesignal am Signalleiter (38) anliegt und eine Hauptluftleitung (7) drucklos ist und die eine Betätigung eines Bremsantriebes (10) nur dann zulassen, wenn die Hauptluftleitung (7) drucklos ist.

20. Rangierautomatik nach einem der Ansprüche 5 bis 19, dadurch gekennzeichnet, daß im Bereich der Ablaufanlage eine Radsatzdiagnoseanlage (43) angeordnet ist, die dazu ausgerüstet ist, Schäden an den Laufwerken und Radsätzen der Güterwagen im Durchfahrbetrieb zu erkennen und an einen Leitstand (31) zu melden.

## Claims

1. A process to automate shunting of rail-mounted freight cars, especially non-self-propelled freight cars in switchyards with a gravity classification system, whereby a set desired gravity classification speed (V_{abl}) is maintained in a gravity classification area (41, 42) that comprises a gravity classification zone (41) with a point distribution zone and sorting siding (42), and the freight cars are precisely braked on the sorting sidings (42) when they approach the preceding cars by an independent electronic control device (23) integrated in the freight car (1) using the car brakes (12), whereby the minimum distance (dₘᵢₙ) is maintained between the freight cars in the gravity classification area (41) by the control device (23) using the car brakes (12).

2. A process according to claim 1 whereby the independently acting control and regulating device (23) is activated, the cars are uncoupled, the brakes (13) are vented, the brakes' mode of operation (14) is set, the operability of the car brakes (12) is checked, and the automatic coupling (6) is checked from a control station (31) by remote data transmission (36, 4).

3. A process according to claims 1 or 2 whereby the path-dependent desired gravity classification speed (V_{abl}) for a gravity classification path (S) is either preprogrammed in a control unit (2) or preset from a control station (31) using remote data transmission (36, 4).

4. A process according to claims 1, 2 or 3 whereby in the area of the gravity classification zone (41) a distance control (28) integrated in the freight cars maintains a minimum distance (dₘᵢₙ) to the preceding cars; a minimum distance (dₘᵢₙ) is maintained in the area of the sorting sidings (42) when a car approaches a preceding car and the speed of the preceding car is greater than a predetermined speed; a car is braked independently a specific amount in the area of the sorting sidings (42) with subsequent coupling when the speed of the car in front is less than a predetermined speed.

5. A automatic shunting system for rail-mounted freight cars, especially non-self-propelled freight cars, to automate shunting in switchyards with a gravity classification system in a gravity classification area with a gravity classification zone (41) and sorting siding (42), where the freight cares (1) have an independent control device (23) to maintain a set desired gravity classification speed (V_{abl}) in a classification area (41, 42), and a control device (23) to carry out precision braking when a car approaches a preceding car, and the control device has a control unit (2), sensors (5, 8) and a braking device (10, 11, 12), whereby the independent control device (23) has a distance controller (28) that maintains a minimum distance (dₘᵢₙ) to the car in front in the gravity classification area (41).

6. A automatic shunting system according to claim 5 whereby the independent control device (23) has a control circuit (27) that determines the current desired gravity classification speed (V_{abl}) depending on the traversed gravity classification path (S) and the predetermined speed values that are set by a control station (31) or the control unit (2) as setpoints.

7. A automatic shunting system according to claim 6 whereby the independent control device (23) has a control circuit that (given a sufficient interval between cars): Sends the value determined by the control circuit (27) for the desired gravity classification speed (V_{abl}) to a speed regulator (26); activates the distance control (28) when cars fall below a minimum distance in the gravity classification zone (41); and activates a targeted braking device (29) when the cars fall below the minimum distance in the sorting sidings (42); the braking device ensures that the cars are braked a specific amount and independently coupled when the cars approach a preceding car; the setpoints detected by the distance regulator (28) and targeted braking control (29) for the speed (Vₛₒₗₗ) are also sent to the speed controller (26).

8. A automatic shunting system according to one of claims 5-7 whereby the cars are equipped with sensors (8) to detect the traversed gravity classification path (S) and the speed (Vᵢₛₜ), and with sensors (5) to detect the distance (dᵢₛₜ) to the car moving or standing in front, and the sensors (5) to detect the distance are laser, microwave or ultrasonic sensors.

9. A automatic shunting system according to one of claim 5-8 whereby the controller (2) is a microcomputer or a stored-program control with an associated input and output and associated control program.

10. A automatic shunting system according to one of claims 5-9 whereby the control device (23) has a speed controller (26) that acts directly on the car brake (12) via a brake drive (21, 10, 11) and maintains the preset desired speed (Vₛₒₗₗ) by comparing the actual speed (Vᵢₛₜ) with the desired speed (Vₛₒₗₗ).

11. A automatic shunting system according to claim 10 whereby the brake drive (21, 10, 11) has a controllable actuator (21) and an electronic drive (10), and the electronic drive (10) acts directly on the conventional car brake (12) of the freight car by the transmission of force (11).

12. A automatic shunting system according to claim 10 whereby the brake drive has an electronically controlled pneumatic valve that can be used by controller (2) to control a pneumatic brake cylinder of the car brake (12) during gravitational classification of the freight cars.

13. A automatic shunting system according to one of claims 5-12 whereby the cars have a remote-controlled operating mechanism (13) to vent the car brake (12), a remote-controlled operating mechanism (14) to set the mode of brake operation (G, P) and/or a switchover device (15) that allows the brake force to be automatically set depending on the current load weight stored in a data memory of the controller (2).

14. A automatic shunting system according to one of claims 5-13 whereby the cars are equipped with automatic couplings (6) that independently close when they bump another car, and they can be opened by a lever or an electrically-actuated operating mechanism.

15. A automatic shunting system according to one of claims 5-14 whereby the cars are equipped with a display and operating device (3) that allows the input and display of current freight data; it also allows the control device (23) to control the desired gravitational classification speed (V_{abl}) and permits a specific amount of braking; the display and operating devices is equipped with an ID data carrier (16) that is connected to the controller (2) and can be read and/or written into by the ID devices (37) at the tracks.

16. A automatic shunting system according to one of claims 5-15 whereby the switching system has a control station (31) that is equipped to do the following: Activate the control device (23) of the freight cars, determine the desired gravity classification speed (V_{abl}) for automatic wagon humping, identify the incoming cars, start uncoupling the cars at set separation sites, vent the brakes and check by remote control the coupling and braking functions of the cars; the control station and the cars are equipped with a remote data transmission device (36, 4) that allows the exchange of information and control instructions between the control station (31) and the freight cars (1).

17. A automatic shunting system according to claim 16 whereby the control station (31) is in a locomotive (39) as a compact controller, and the data is transmitted between the controller and the freight cars via a data line (22).

18. A automatic shunting system according to one of claims 5-17 whereby the cars have a data and control line (22) that can be connected from car to car via automatic coupling (6); the data and control line is connected to the controller (2), and a preceding car can use it to transmit a braking signal or the value for the desired speed (Vₛₒₗₗ) to the following car during the gravitational classification process; hence the brake devices (10, 11, 12) of the following cars are controlled and actuated when the leading car controls the distance of the preceding car or brakes the preceding car by a specific amount.

19. A automatic shunting system according to one of claims 5-18 whereby the cars are equipped with a safety switch (17), an signal receiver (18) and a pressure switch (19), and at least one inbound track (40) equipped with a linear signal conductor (38) that only permit the automatic coupling (6) and the brake venting device (13) to be actuated when a release signal is at the signal conductor (38) and a main air line (7) is without pressure, and it only permits a brake drive (10) to be actuated when the main air line (7) is without pressure.

20. An automatic shunting system according to one of claims 5-19 whereby there is a wheelset diagnosis system (43) in the gravitational classification system that is equipped to recognize damage to the carriages and wheelsets of the freight cars as they pass through and send the information to the control station.

## Revendications

1. Procédé d'automatisation de la manoeuvre de wagons à marchandises roulant sur rails, en particulier de wagons à marchandises dépourvus de dispositif moteur propre, dans des installations de triage avec bosse de triage, selon lequel un dispositif de commande et de réglage (23) à action autonome intégré dans les wagons (1) assure, en s'aidant du frein (12) du wagon, un respect d'une vitesse de triage de consigne (V_{abl}) prédéterminée dans un secteur de triage (41, 42) comprenant une zone de triage (41) avec une zone de répartition par aiguillage et des voies de classement (42), et un ralentissement précis des wagons à marchandises sur les voies de classement (42) à l'approche des wagons se trouvant devant eux, caractérisé en ce qu'un respect d'une distance minimum (dₘᵢₙ) entre les wagons à marchandises se trouvant dans la zone de triage (41) est assuré par le dispositif de commande et de réglage (23) à l'aide du frein de wagon (12).

2. Procédé suivant la revendication 1, caractérisé en ce que l'activation du dispositif de commande et de réglage (23) à action autonome, le dételage (6) des wagons, la purge d'air des freins (13), le réglage du mode de freinage (14) et le contrôle de la disponibilité opérationnelle du frein de wagon (12) et d'accouplements automatiques (6) s'opèrent à partir d'un poste de conduite (31), à l'aide d'un dispositif de télétransmission de données (36, 4).

3. Procédé suivant la revendication 1 ou 2, caractérisé en ce que la vitesse de triage de consigne (V_{abl}) pour une voie de triage (S) est soit préprogrammée dans une unité de commande (2), soit prédéfinie à partir d'un poste de conduite (31), à l'aide d'un dispositif de télétransmission de données (36, 4).

4. Procédé suivant la revendication 1, 2 ou 3, caractérisé en ce que dans la zone de triage (41), un dispositif de réglage de distance (28) intégré dans les wagons à marchandises impose le respect d'une distance minimum (dₘᵢₙ) par rapport aux wagons roulant en aval, et en ce que dans la zone des voies de classement (42), lorsque les wagons approchent des wagons se trouvant devant eux, un dispositif de réglage de distance (28) impose également le respect d'une distance minimum (dₘᵢₙ), si la vitesse du wagon en aval est supérieure à une vitesse limite définie au préalable, et en ce que dans la zone des voies de classement (42), un freinage sélectif (29) autonome avec attelage consécutif est opéré si la vitesse du wagon en aval est inférieure à une vitesse limite définie au préalable.

5. Automatisme de manoeuvre pour wagons à marchandises roulant sur rails, en particulier wagons à marchandises dépourvus de dispositif moteur propre, pour permettre la manoeuvre dans des installations de triage avec bosse de triage, dans un secteur de triage avec une zone de triage (41) et une (des) voie(s) de classement (42), les wagons à marchandises (1) présentant un dispositif de commande et de réglage (23) à action autonome imposant le respect d'une vitesse de triage de consigne (V_{abl}) définie au préalable dans le secteur de triage (41, 42), et un dispositif de contrôle et de réglage (23) pour exécuter un freinage sélectif à l'approche de wagons se trouvant devant eux, et étant munis à cet effet d'une unité de commande (2), de capteurs (5, 8) et d'un dispositif de freinage (10, 11, 12), caractérisé en ce que le dispositif de commande et de réglage (23) à action autonome présente un réglage de distance (28) qui impose un respect d'une distance minimum (dₘᵢₙ) par rapport aux wagons en aval dans la zone de triage (41).

6. Automatisme de manoeuvre suivant la revendication 5, caractérisé en ce que le dispositif de commande et de réglage (23) à action autonome présente un circuit de commande (27) qui calcule la vitesse de triage de consigne (V_{abl}) actuelle en fonction du trajet de triage (S) parcouru et de valeurs de vitesse définies au préalable, qui sont données comme valeurs de consigne par un poste de conduite (31) ou l'unité de commande (2).

7. Automatisme de manoeuvre suivant la revendication 6, caractérisé en ce que le dispositif de commande et de réglage (23) à action autonome présente un circuit de commande (30) qui, si la distance entre les wagons est suffisante, envoie la valeur calculée par le circuit de commande (27) pour la vitesse de triage de consigne (V_{abl}) à un régulateur de vitesse (26), et qui active le dispositif de réglage de distance (28) si l'écart relevé dans la zone de triage (41) est inférieur à une distance minimum, et active un dispositif de freinage sélectif (29) qui fait en sorte qu'à l'approche de wagons en aval, les wagons sont freinés de manière précise et attelés automatiquement, auquel cas les valeurs de consigne pour la vitesse (Vₛₒₗₗ) relevées par le dispositif de réglage de distance (28) ou le dispositif de freinage (29) sont également envoyées au régulateur de vitesse (26).

8. Automatisme de manoeuvre suivant l'une des revendications 5 à 7, caractérisé en ce que les wagons sont équipés de capteurs (8) constatant le trajet de triage (S) déjà parcouru et la vitesse, et de capteurs (5) constatant la distance (dᵢₛₜ) par rapport à des wagons roulant ou immobilisés en aval, les capteurs (5) constatant la distance étant des capteurs à laser, à hyperfréquences ou à ultrasons.

9. Automatisme de manoeuvre suivant l'une des revendications 5 à 8, caractérisé en ce que l'unité de commande (2) est un micro-ordinateur ou une commande à programme enregistrable comprenant une unité d'entrée et de sortie et un programme de commande associé.

10. Automatisme de manoeuvre suivant l'une des revendications 5 à 9, caractérisé en ce que le dispositif de commande et de réglage (23) présente un régulateur de vitesse (26) qui agit directement sur le frein de wagon (12), par l'intermédiaire d'un moteur de frein (21, 10, 11), et qui impose le respect de la vitesse de consigne (Vₛₒₗₗ) définie au préalable, par une comparaison de la vitesse réelle (Vᵢₛₜ) à la vitesse de consigne (Vₛₒₗₗ).

11. Automatisme de manoeuvre suivant la revendication 10, caractérisé en ce que le moteur de frein (21, 10, 11) présente un vérin (21) susceptible d'être commandé et un moteur électrique (10), le moteur électrique (10) agissant directement, à l'aide d'un mécanisme de transmission (11), sur le frein (12) conventionnel du wagon à marchandises.

12. Automatisme de manoeuvre suivant la revendication 10, caractérisé en ce que le moteur de frein présente une soupape pneumatique à commande électronique, à l'aide de laquelle un cylindre de frein pneumatique du frein de wagon (12) peut être actionné par l'unité de commande (2) pendant le triage du wagon.

13. Automatisme de manoeuvre suivant l'une des revendications 5 à 12, caractérisé en ce que les wagons présentent un dispositif de réglage télécommandé (13) pour la purge d'air du frein de wagon (12), un dispositif de réglage télécommandé (14) pour régler le mode de freinage (G, P) et/ou un dispositif de commutation (15) qui permet un réglage automatique de l'effort de freinage en fonction du poids de charge réel, stocké dans une mémoire d'informations de l'unité de commande (2).

14. Automatisme de manoeuvre suivant l'une des revendications 5 à 13, caractérisé en ce que les wagons sont équipés d'accouplements automatiques (6) qui se ferment automatiquement lors des chocs sur un autre wagon et qui peuvent être ouverts par un mécanisme à levier ou un dispositif de réglage à actionnement électrique.

15. Automatisme de manoeuvre suivant l'une des revendications 5 à 14, caractérisé en ce que les wagons sont équipés d'un dispositif d'affichage et de manipulation (3) qui permet un affichage et une saisie des informations de fret actuelles ainsi qu'une mise en action du dispositif de commande et de réglage (23) pour exécuter la régulation de la vitesse de triage de consigne (V_{abl}) et le freinage, ainsi que d'un support de données d'identification (16) qui est en relation avec l'unité de commande (2) et que des dispositifs d'identification (37) placés sur les voies peuvent lire et/ou sur lequel ces derniers peuvent écrire.

16. Automatisme de manoeuvre suivant l'une des revendications 5 à 15, caractérisé en ce que l'installation de manoeuvre présente un poste de conduite (31) équipé pour initier l'activation du dispositif de commande et de réglage (23) des wagons à marchandises, fixer la vitesse de triage de consigne (V_{abl}) pour le triage automatisé des wagons, identifier les wagons arrivants, initier le dételage des wagons aux points de séparation prévus, purger l'air des freins, et contrôler par télécommande les fonctions d'attelage et de freinage, et en ce qu'à cet effet, le poste de conduite et les wagons sont équipés d'un dispositif de télétransmission de données qui permet un échange d'informations et d'instructions de commande entre le poste de conduite (31) et les wagons à marchandises (1).

17. Automatisme de manoeuvre suivant la revendication 16, caractérisé en ce que le poste de conduite (31) est placé sous forme d'appareil de conduite compact dans une locomotive (39), et en ce que la transmission de données entre l'appareil de conduite et les wagons à marchandises se fait par une ligne de données (22).

18. Automatisme de manoeuvre suivant l'une des revendications 5 à 17, caractérisé en ce que les wagons présentent une ligne de données et de commande (22) qui peut être passée de wagon en wagon grâce à l'accouplement automatique (6), qui est en relation avec l'unité de commande (2) et à l'aide de laquelle, lors du triage des wagons, un wagon roulant devant peut transmettre à des wagons qui le suivent un signal de freinage ou la valeur pour la vitesse de consigne (Vₛₒₗₗ), de sorte qu'en cas de réglage de la distance ou de freinage depuis le wagon de tête,, les dispositifs de freinage (10, 11, 12) des wagons qui le suivent peuvent être commandés et actionnés.

19. Automatisme de manoeuvre suivant l'une des revendications 5 à 18, caractérisé en ce que les wagons sont équipés d'un circuit de sécurité (17), d'un récepteur de signaux (18) et d'un manocontacteur (19) et au moins des voies d'arrivée (40) sont équipées d'un conducteur de signaux (38) de forme linéaire qui n'autorisent un actionnement des accouplements automatiques (6) et d'un dispositif de purge d'air de frein (13) qui si un signal de validation se présente au conducteur de signaux (38) et une conduite d'air principale (7) est sans pression,, et qui n'autorisent un actionnement du moteur de frein (10) que si la conduite d'air principale (7) est sans pression.

20. Automatisme de manoeuvre suivant l'une des revendications 5 à 19, caractérisé en ce que dans la zone de l'installation de triage, on a prévu une installation de diagnostic des essieux (43) qui est adaptée pour détecter des dommages aux trains de roulement et aux essieux des wagons à marchandises sans que ceux-ci ne s'arrêtent, et pour les signaler au poste de commande (31).
